(19) Europäisches Patentamt
European Patent Office
Office européen des brevets

(11) **EP 2 192 550 A1**

(12) **EUROPÄISCHE PATENTANMELDUNG**

(43) Veröffentlichungstag:
**02.06.2010 Patentblatt 2010/22**

(51) Int Cl.:
***G06T 7/20*** *(2006.01)*

(21) Anmeldenummer: **09175744.3**

(22) Anmeldetag: **12.11.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **28.11.2008 DE 102008059551**

(71) Anmelder: **Hella KGaA Hueck & Co.**
**59552 Lippstadt (DE)**

(72) Erfinder:
• **FEIDEN, Dirk**
**12623 Berlin (DE)**
• **DAMMEIER, Thomas**
**10439 Berlin (DE)**

(74) Vertreter: **Schaumburg, Thoenes, Thurn,**
**Landskron, Eckert**
**Patentanwälte**
**Postfach 86 07 48**
**81634 München (DE)**

(54) **Verfahren zum Ermitteln der Lageänderung eines Kamerasystems und Vorrichtung zum Erfassen und Verarbeiten von Bildern**

(57) Die Erfindung betrifft ein Verfahren zum Ermitteln der Lageänderung eines Kamerasystems (16), bei dem mit Hilfe von mindestens einer Kamera (17) des Kamerasystems (16) mindestens ein erstes Bild (30) und ein zweites Bild (32) mit Abbildungen eines Erfassungsbereichs (18, 20) vor einem Fahrzeug (12) nacheinander aufgenommen werden, wobei den Bildern (30, 32) entsprechende Bilddaten erzeugt werden. Die erzeugten Bilddaten werden mit Hilfe einer Verarbeitungseinheit (22) verarbeitet. Hierbei werden im ersten Bild (30) mehrere Bereiche (50, 54, 58, 60, 62) festgelegt und für jeden Bereich (50, 54, 58, 60, 62) mindestens ein den gesamten Bereich (50, 54, 58, 60, 62) charakterisierender Wert mit Hilfe eines Wertermittlungsalgorithmus ermittelt. Ferner werden im zweiten Bild (32) mehrere Bereiche (52, 56, 64, 66, 68) festgelegt und für jeden Bereich (52, 56, 64, 66, 68) mindestens ein den gesamten Bereich (52, 56, 64, 66, 68) charakterisierenden Wert mit Hilfe des Wertermittlungsalgorithmus ermittelt. Des Weiteren wird die Position eines zu einem ersten Bereich (54) des ersten Bildes (30) korrespondierenden Bereichs (56) im zweiten Bild (32) mit Hilfe des charakterisierenden Wertes des ersten Bereichs (54) des ersten Bildes (30) und mindestens den charakterisierenden Wert mindestens eines Bereichs (56) des zweiten Bildes (32) ermittelt. In Abhängigkeit von der Position des ersten Bereichs (54) im ersten Bild (30) und der Position des zum ersten Bereich (54) des ersten Bildes (30) korrespondierenden Bereichs (56) des zweiten Bildes (32) wird die Änderung der Lage des Kamerasystems (16) zwischen dem Zeitpunkt der Aufnahme des ersten Bildes (30) und dem Zeitpunkt der Aufnahme des zweiten Bildes (32) ermittelt.

Figur 1

EP 2 192 550 A1

**Beschreibung**

Die Erfindung betrifft ein Verfahren zum Ermitteln der Lageänderung eines Kamerasystems, bei dem mit Hilfe von mindestens einer Kamera des Kamerasystems mindestens ein erstes und ein zweites Bild mit Abbildungen eines Erfassungsbereichs vor einem Fahrzeug nacheinander aufgenommen werden. Es werden den Bildern entsprechende Bilddaten erzeugt. Die erzeugten Bilddaten werden mit Hilfe einer Verarbeitungseinheit verarbeitet. Ferner betrifft die Erfindung eine Vorrichtung zum Durchführen des Verfahrens.

Viele moderne Fahrzeuge haben kamerabasierte Fahrerassistenzsysteme, bei denen mindestens eine Kamera eines Kamerasystems Bilder mit Abbildungen eines Erfassungsbereichs vorzugsweise in Fahrtrichtung vor dem Fahrzeug erfasst. Mit Hilfe von Bildverarbeitungsprogrammen werden die erfassten Bilder verarbeitet. Insbesondere werden verschiedene Objekte in den einzelnen Bildern detektiert und die Lage eines Objektes in verschiedenen Bildern miteinander verglichen. Um die Vergleichbarkeit einzelner Objekte zwischen verschiedenen Bildern zu gewährleisten und die Nachverfolgung der Objekte über mehrere Bilder zu ermöglichen, ist es wichtig, eventuelle Lageänderungen des Kamerasystems zu erfassen und bei der Bildverarbeitung entsprechend zu kompensieren. Insbesondere Nickbewegungen des Kamerasystems beziehungsweise des Fahrzeuges in horizontaler Richtung können die Ermittlung korrekte Ergebnisse gefährden.

Aus dem Dokument DE 101 15 043 A1 ist ein Verfahren zur Kalibrierung eines Kamerasystems bekannt, insbesondere eines auf einem Fahrzeug angeordneten Kamerasystems, bei dem eine Kamera des Kamerasystems auf ein Referenzkörper ausgerichtet ist. In einer Auswerteeinheit des Kamerasystems wird die relative Position der Kamera zu einem Referenzkoordinatensystem ermittelt. Zur Kalibrierung muss der Referenzkörper in einer genau festgelegten Weise zum Referenzkoordinatensystem ausgerichtet sein. Nachteilig an dem Verfahren ist, dass zur Kalibrierung des Kamerasystems ein Referenzkörper benötigt wird, der im Referenzkoordinatensystem auf eine spezielle Weise ausgerichtet werden muss. Eine Ermittlung und eine eventuelle Korrektur von Lageänderungen des Kamerasystems während der Fahrt des Fahrzeuges ist somit nicht möglich.

Aus dem Dokument DE 10 2004 023322 A1 ist ein Verfahren zur Lage- und/oder Positionsvermessung von Objekten mittels Bildverarbeitungsverfahren bekannt. Dabei wird in einem aufgenommenen Bild die von einem definierten nicht ebenen Kalibrierkörper hervorgerufene Selbstabschattung ermittelt und anhand der erfassten Selbstabschattung Parameter zur Entzerrung von Schatten bestimmt. Zur Lage und/oder Positionsvermessung wird dabei wenigstens ein zu vermessendes Objekt in den Erfassungsbereich einer Kamera und den von der Beleuchtung bestrahlten Bereich eingebracht, um eine Bildaufnahme des Objekts zu erzeugen. Die Bildaufnahme des Objektes wird anschießend mittels der bestimmten Parameter entzerrt und daraus die Lage und die Position des Objekts ermittelt. Nachteilig an dem Verfahren ist, dass ein definierter nicht ebener Kalibrierkörper benötigt wird und somit eine Kalibrierung während der Fahrt des Fahrzeugs nicht möglich ist. Ferner ist es nachteilig, dass nur Objekte vermessen werden können, die in einem von einer Beleuchtung bestrahlten Bereich angeordnet sind.

Eine weitere denkbare Möglichkeit zur Ermittlung von Lageänderungen eines Kamerasystems besteht darin, mit Hilfe mindestens einer Kamera des Kamerasystems zwei Bilder mit Abbildungen eines Erfassungsbereichs der Kamera vor dem Fahrzeug aufzunehmen und mit Hilfe eines Vergleichs jedes Pixels zwischen dem ersten Bild und dem auf das erste Bild folgende zweite Bild die Lageänderung des Kamerasystems zu ermitteln. Nachteilig an diesem Verfahren ist, dass zur Durchführung des Verfahrens ein hoher Rechen- und/oder Speicheraufwand erforderlich ist, der das Kamerasystem verteuert und eine kompakte Bauweise des Kamerasystems erschwert.

Aufgabe der Erfindung ist es, ein Verfahren und eine Vorrichtung anzugeben, bei denen die Lageänderung eines Kamerasystems auf einfache Weise und mit geringem Aufwand ermittelt werden kann.

Diese Aufgabe wird durch ein Verfahren mit den Merkmalen des Patentanspruches 1 und durch eine Vorrichtung mit den Merkmalen des Patentanspruchs 14 gelöst. Vorteilhafte Weiterbildungen der Erfindung sind in den abhängigen Patentansprüchen angegeben.

Durch ein Verfahren mit den Merkmalen des Patentanspruchs 1 wird insbesondere durch die Festlegung mehrerer Bereiche, die jeweils mindestens zwei Pixel umfassen, eine einfache, ressourcenschonende Bildverarbeitung ermöglicht. In einem ersten mit Hilfe von mindestens einer Kamera eines Kamerasystems erzeugten Bild mit der Abbildung eines Erfassungsbereichs vor einem Fahrzeug wird mit Hilfe eines Wertermittlungsalgorithmus jeweils ein den gesamten, jeweiligen Bereich charakterisierender Wert ermittelt. In einem zweiten Bild mit Abbildung eines Erfassungsbereichs vor dem Fahrzeug, das nach dem ersten Bild mit Hilfe der Kamera des Kamerasystems aufgenommen wird, werden mehrerer Bereiche, die jeweils mindestens zwei Pixel umfassen, festgelegt. Es wird jeweils ein den gesamten, jeweiligen Bereich charakterisierender Wert mit Hilfe des Wertermittlungsalgorithmus ermittelt. Dadurch wird erreicht, dass ein zu einem ersten Bereich des ersten Bildes korrespondierender Bereich im zweiten Bild mit Hilfe der charakterisierenden Werte ermittelt und dessen Position im zweiten Bild mit geringem Aufwand ermittelt werden kann. In Abhängigkeit von der Position des ersten Bereichs im ersten Bild und der Position des zum ersten Bereich des ersten Bildes korrespondierenden Bereichs im zweiten Bild wird die Änderung der Lage des Kamerasystems zwischen dem Zeitpunkt der Aufnahme des ersten Bildes und dem Zeitpunkt der Aufnahme des zweiten Bildes ermittelt. Auf diese Weise kann die Änderung der Lage des Kamerasystems mit geringem Aufwand durch Vergleich des ersten Bildes und des zweiten Bildes miteinander ermittelt werden. Hierdurch wird ein geringer Ressourceneinsatz benötigt, was wiederum dazu führt, dass eine kompakte Bauweise einer Vorrichtung zum Durchführen des Verfahrens ermöglicht wird und die Kosten zur Implementierung des Verfahrens in einem Fahrzeug reduziert werden. Ferner kann die Änderung der Lage des Kamerasystems durch den geringeren Aufwand schneller ermittelt werden. Weiterhin kann bei einer hochdynamischen Verarbeitung der Bilddaten von einer ermittelten Lageänderung der Kamera auf eine Lageänderung des Fahrzeugs geschlossen werden

Es ist vorteilhaft, wenn zumindest ein Ausschnitt des ersten Bildes und ein Ausschnitt des zweiten Bildes jeweils in rechteckige, gleichgroße Bereiche aufgeteilt werden. Durch die Aufteilung in rechteckige, gleichgroße Bereiche ist ein Vergleich des ersten Bildes mit dem zweiten Bild auf einfache Weise möglich. Ferner ist die Zuordnung der Pixel der Bilder zu den einzelnen Bereichen eindeutig und einfach möglich.

Des Weiteren ist es vorteilhaft, die Bereiche jeweils derart festzulegen, dass zeilenweise jeweils eine vorgegebene Anzahl an Pixel zu einem Bereich zusammengefasst werden. Insbesondere ist es vorteilhaft, nur einen Teil der durch die Pixel gebildeten Zeilen in Bereiche einzuteilen. Hierdurch kann der Verarbeitungsaufwand zusätzlich reduziert werden. Vorzugsweise werden die mittleren Zeilen des Bildes verwendet. In diesem Bereich des Bildes wird bei einer Geradeausfahrt des Fahrzeuges in der Regel der Horizont abgebildet. Da in diesem Bereich sich die Position von Abbildungen von Objekten im zweiten Bild im Vergleich zur Position von Abbildungen derselben Objekte im ersten Bild nur geringfügig ändert, sofern keine Änderung der Lage des Kamerasystems vorliegt, ist dieser Bereich für die Ermittlung der Änderung der Lage des Kamerasystems am besten geeignet.

Alternativ können die Bereiche derart festgelegt werden, dass spaltenweise jeweils eine vorgegebene Anzahl an Pixel zu einem Bereich zusammengefasst werden. Es ist vorteilhaft, dass nur ein Teil der durch die Pixel gebildeten Spalten, vorzugsweise der mittlere Teil, des jeweiligen Bildes in Bereiche eingeteilt wird.

Insbesondere können jeweils ganze Zeilen beziehungsweise Spalten als jeweils ein Bereich festgelegt werden.

Es ist vorteilhaft, wenn jeweils als charakterisierenden Wert für einen Bereich ein Grauwert des Bereichs ermittelt wird. Der Grauwert lässt sich auf einfache Weise aus den Grauwerten der einzelnen Pixel des Bereichs ermitteln. Für die Ermittlung von Grauwerten wird lediglich ein Schwarzweißkamerasystem benötigt.

Es ist vorteilhaft den Grauwert eines jeden Bereichs jeweils durch Aufsummierung der Grauwerte aller Pixel des jeweiligen Bereichs zu ermitteln. Auf diese Weise kann der Grauwert des Bereichs auf einfache Weise mit geringem Aufwand bestimmt werden.

Alternativ kann der Grauwert eines jeden Bereichs jeweils als Mittelwert der Grauwerte aller Pixel des jeweiligen Bereichs ermittelt werden. Dies hat den Vorteil, dass die ermittelten Grauwerte der Bereiche kleinere Werte als beim Aufsummieren der Grauwerte aller Pixel des jeweiligen Bereichs haben, insbesondere wenn die Bereiche eine Vielzahl von Pixel umfassen.

Es ist vorteilhaft, wenn mindestens eines durch die charakterisierenden Werte von mindestens zwei Bereichen des ersten Bildes gebildeten ersten Musters des ersten Bildes im ersten Bild ermittelt wird, und die Position eines zum ersten Muster des ersten Bildes korrespondierenden ersten Musters des zweiten Bildes ermittelt wird und mindestens in Abhängigkeit von der Position des ersten Musters des ersten Bildes im ersten Bild in der Position des ersten Musters des zweiten Bildes im zweiten Bild die Änderung der Lage des Kamerasystems zwischen dem Zeitpunkt der Aufnahme des ersten Bildes und dem Zeitpunkt der Aufnahme des zweiten Bildes ermittelt wird. Die Ermittlung eines zu dem ersten Muster des ersten Bildes korrespondierenden ersten Musters des zweiten Bildes ist eindeutiger als die Ermittlung eines zu einem ersten Bereich des ersten Bildes korrespondierenden ersten Bereichs des zweiten Bildes. Hierdurch kann die Leistungsfähigkeit des Verfahrens erhöht werden, wobei unter der Leistungsfähigkeit die Genauigkeit, mit der die Lageänderung des Kamerasystems bestimmt wird, verstanden wird. Die Ermittlung der Position des Musters im zweiten Bild kann beispielsweise mittels Korrelationsanalyse erfolgen.

Des Weiteren ist es vorteilhaft, wenn das zum ersten Muster des Bildes korrespondierende erste Muster des zweiten Bildes mittels euklidischer Distanz ermittelt wird, wobei die euklidische Distanz ein Ähnlichkeitsmaß ist. Alternativ können anstatt der euklidischen Distanz auch andere Ähnlichkeitsmaße verwendet werden.

Es ist vorteilhaft, den Abstand zwischen der Position eines ersten Bereichs im ersten Bild und der Position des zum ersten Bereich des ersten Bildes korrespondierenden Bereichs im zweiten Bild zu ermittelt. Vorzugsweise wird der Abstand in Pixel zwischen den beiden Bereichen ermittelt. Mit Hilfe des ermittelten Abstands kann auf einfache Weise die Änderung der Lage des Kamerasystems ermittelt werden.

Als Lageänderungen werden vorzugsweise eine Nickwinkeländerung, Gierwinkeländerung, der aktuelle Nickwinkel und/oder der aktuelle Gierwinkel ermittelt.

Ferner betrifft die Erfindung eine Vorrichtung zum Erfassen und Verarbeiten von Bildern. Die Vorrichtung umfasst mindestens ein Kamerasystem mit mindestens einer Kamera zur Aufnahme mindestens eines ersten und eines zweiten Bildes mit Abbildungen eines Erfassungsbereichs vor einem Fahrzeug und mindestens eine Verarbeitungseinheit zur Verarbeitung der mit Hilfe des Kamerasystems erzeugten, den Bildern entsprechenden Bilddaten. Die Verarbeitungseinheit arbeitet mindestens ein Bildverarbeitungsprogramm zur Festlegung von mehreren Bereichen im ersten Bild, und zur Festlegung von mehreren Bereichen im zweiten Bild ab, wobei jeder Bereich jeweils mindestens zwei Pixel umfasst. Ferner arbeitet die Verarbeitungseinheit ein Wertermittlungsalgorithmus ab, mit dessen Hilfe für jeden Bereich des ersten Bildes und für jeden Bereich des zweiten Bildes mindestens ein den gesamten Bereich charakterisierenden Wert ermittelt wird. Mit Hilfe des Bildverarbeitungsprogramms wird ferner zumindest die Position eines zum ersten Bereich des ersten Bildes korrespondierenden Bereichs im zweiten Bild mit Hilfe des charakterisierenden Werts des ersten Bereichs des ersten Bildes und mindestens dem charakterisierenden Wert mindestens eines Bereichs des zweiten Bildes ermittelt. Weiterhin wird mit Hilfe des Bildverarbeitungsprogramms mindestens in Abhängigkeit von der Position des ersten Bereichs im ersten Bild und der Position des zum ersten Bereich des ersten Bildes korrespondierenden Bereichs des zweiten Bildes die Änderung der Lage des Kamerasystems zwischen dem Zeitpunkt der Aufnahme des ersten Bildes und dem Zeitpunkt der Aufnahme des zweiten Bildes ermittelt.

Die durch den unabhängigen Vorrichtungsanspruch spezifizierte Vorrichtung kann in gleicher Weise weitergebildet werden, wie das erfindungsgemäße Verfahren. Insbesondere kann die Vorrichtung mit den in den auf das Verfahren zurückbezogenen abhängigen Patentansprüchen angegebenen Merkmalen beziehungsweise entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand von Ausführungsbeispielen näher erläutert.

Es zeigen:

Figur 1      eine schematische Darstellung eines Fahrzeugs in einer Ver- kehrssituation als Seitenansicht, wobei das Fahrzeug eine Vor- richtung zum Erfassen und Verarbeiten von Bildern hat;

Figur 2      eine schematische Darstellung von zwei nacheinander aufge- nommen Bildern und von ersten aus den Bildern mit Hilfe des erfindungsgemäßen Verfahrens gewonnenen Informationen;

Figur 3      eine vergrößerte Ansicht des ersten Bildes nach Figur 2;

Figur 4      eine schematische Darstellung eines eine Vielzahl von Pixel um- fassenden Ausschnitts einer Zeile eines mit Hilfe einer Kamera eines Kamerasystems aufgenommenen Bildes und eine mögliche Einteilung des Ausschnitts in mehrere Bereiche; und

Figur 5      ein Blockschaltbild mit einer Verarbeitungseinheit einer Vorrich- tung zum Erfassen und Verarbeiten von Bildern und dem Kame- rasystem.

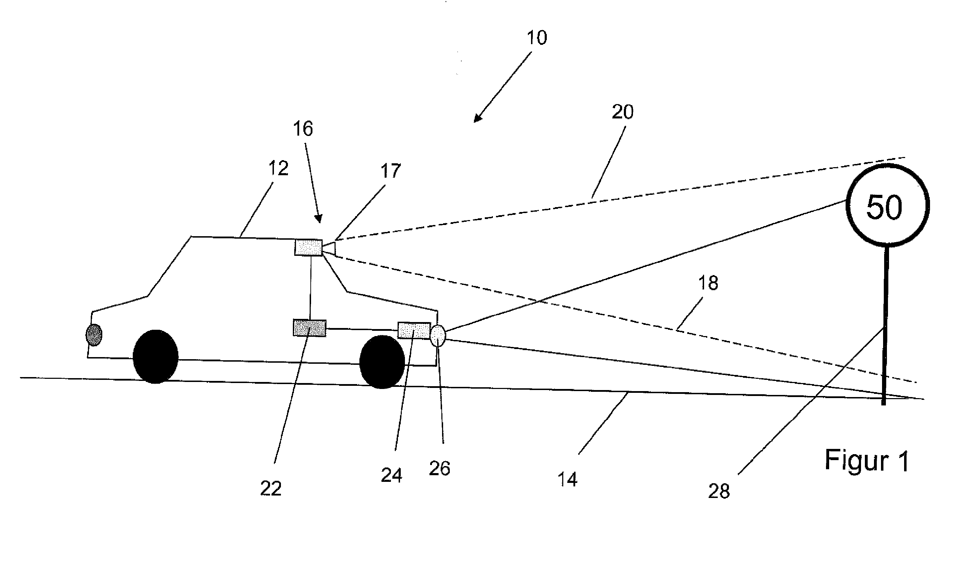

In Figur 1 ist eine Seitenansicht eines Fahrzeugs 12 in einer Verkehrssituation 10 bei der Fahrt des Fahrzeugs 12 entlang einer Fahrbahn 14 gezeigt. Das Fahrzeug 12 hat ein Kamerasystem 16 mit mindestens einer Kamera 17. Das Kamerasystem 16 kann beispielsweise ein Stereokamerasystem oder Monokamerasystem sowie ein Farbkamerasystem oder ein Schwarzweißkamerasystem zur Ermittlung von Grauwerten sein. Das Kamerasystem 16 erfasst eine Bildfolge aus Bildern mit Abbildungen eines Erfassungsbereichs vor dem Fahrzeug 12. Der horizontale Erfassungsbereich ist in Figur 1 schematisch durch die Strichlinien 18, 20 dargestellt. Ferner werden den Bildern entsprechende Bilddaten erzeugt. Die erzeugten Bilddaten werden vom Kamerasystem 16 zu einer im Fahrzeug 12 angeordneten Verarbeitungseinheit 22 übertragen und von dieser weiterverarbeitet. Insbesondere werden die Bilddaten in der Verarbeitungseinheit 22 verarbeitet, um ein Fahrassistenzsystem für den Fahrzeugführer des Fahrzeugs 12 bereitzustellen. Pro Sekunde werden vorzugsweise 10 bis 25 Bilder von der Kamera 17 des Kamerasystems 16 fortlaufend aufgenommen und verarbeitet.

Die durch das Kamerasystem 16 erzeugten Bilddaten eines Objektes 28 werden von der Verarbeitungseinheit 22 verarbeitet, wobei die Abbildung des Objektes 28 als Objektabbildung beziehungsweise als Objekt detektiert und vorzugsweise der Objekttyp des Objektes 28 klassifiziert wird. Auf gleiche Weise können Verkehrsschilder, Leiteinrichtungen, Straßenleuchten, auf der Fahrspur vorausfahrende Fahrzeuge und auf einer Gegenfahrbahn der Fahrbahn 14 entgegenkommende Fahrzeuge als Objekte detektiert und deren Objekttyp klassifiziert werden. Insbesondere wird die Position der in einem Bild detektierten Objekte 28 ermittelt und mit der Position derselben Objekte 28 in einem in der Bildfolge nachfolgenden Bild verglichen. Der Vergleich der Position von Objekten 28 in einem Bild und einem nach diesem Bild aufgenommenen zweiten Bild wird beispielsweise genutzt, um das Fahrverhalten zu beeinflussen und/oder um dem Fahrer des Fahrzeugs 12 gezielte Informationen zum Umfeld geben zu können. Diese Informationen können beispielsweise auch als Eingangsdaten für Fahrerassistenzsysteme, Verkehrszeichenerkennungssysteme, Objektverfolgungsroutinen und/oder Lichtassistenzsysteme sein.

Änderungen der Lage des Kamerasystems 16 zwischen dem Zeitpunkt der Aufnahme des ersten Bildes mit Hilfe der Kamera 17 des Kamerasystems 16 und dem Zeitpunkt der Aufnahme des zweiten Bildes mit Hilfe der Kamera 17 müssen ermittelt und bei der Bildverarbeitung berücksichtigt und kompensiert werden, um aus dem Vergleich der Position eines oder mehrerer Objekte 28 im ersten Bild und der Position desselben beziehungsweise derselben Objekte 28 im zweiten Bild korrekte Informationen für das Fahrassistenzsystem gewinnen zu können. Wird die Änderung der Lage des Kamerasystems 16 nicht ermittelt und bei der Verarbeitung der mit Hilfe des Kamerasystems 16 gewonnenen Bilddaten nicht berücksichtigt, so kann dies dazu führen, dass dem Fahrerassistenzsystem von der Verarbeitungseinheit 22 falsche Informationen zur Verfügung gestellt werden, wodurch eventuell die Verkehrssicherheit beeinträchtigt werden kann. Die mit Hilfe der Verarbeitungseinheit 22 weiterverarbeiteten Bilddaten können beispielsweise bei der Steuerung der mit Hilfe eines Frontscheinwerfers 26 des Fahrzeugs 12 bewirkten Lichtabstrahlung und Lichtverteilung durch ein den Frontscheinwerfer 26 ansteuerndes Lichtsteuermodul 24 genutzt werden. Nicht berücksichtigte Änderungen der Lage des Kamerasystems 16 können dazu führen, dass die Frontscheinwerfer 26 durch das Lichtsteuermodul 24 derart angesteuert werden, dass nicht die optimale Ausleuchtung des Verkehrsraumes vor dem Fahrzeug 12 erfolgt. Somit können beispielsweise andere Verkehrsteilnehmer geblendet werden.

Eine Änderung der Lage des Kamerasystems 16 kann beispielsweise durch die Fahrzeugeigenbewegung, Straßenbedingungen, der Eigenbewegung des Kamerasystems 16 und/oder Umwelteinflüssen hervorgerufen werden. Unter der Änderung der Lage des Kamerasystems 16 wird jede Änderung der Art und Weise, in der sich das Kamerasystem 16 im Raum befindet, verstanden. Dies umfasst die Position des Kamerasystems 16 und die Ausrichtung der Kamera 17 des Kamerasystems 16. Bei einer hochdynamischen Verarbeitung der Bilddaten kann von einer ermittelten Lageänderung des Kamerasystems 16 auf eine Lageänderung des Fahrzeugs 12 geschlossen werden. Die Lageänderung des Fahrzeugs 12 kann bei der Ansteuerung der Frontscheinwerfer 26 berücksichtigt werden.

Als Änderung der Lage des Kamerasystems 16 werden insbesondere Nickwinkeländerungen und/oder Gierwinkeländerungen ermittelt. Die jeweilig Lage der optischen Achse der Kamera 17 des Kamerasystems 16 wird üblicherweise im Bezug auf ein fahrzeugfestes Koordinatensystem, beispielsweise auf ein Fahrzeugkoordinatensystem oder ein Kamerakoordinatensystem bezogen. Ausgehend von einem solchen fahrzeugfesten Koordinatensystem kann auch die Lage der optischen Achse der Kamera 17 in Bezug auf ein Weltkoordinatensystem bestimmt werden. Das Fahrzeugkoordinatensystem ist ein rechtwinkliges Koordinatensystem mit einem Koordinatenursprung vorzugsweise im Schwerpunkt des Fahrzeugs 12 oder in der Mitte der Vorderachse des Fahrzeugs 12 auf der Fahrbahn 14, so dass die x-Achse nach vorne gerichtet ist und vorzugsweise waagerecht ist und sich in der Fahrzeuglängsebene befindet. Die y-Achse steht senkrecht auf der Fahrzeugslängsmittelebene und zeigt nach links. Die z-Achse zeigt nach oben. Bezogen auf ein Kamerakoordinatensystem, das die gleiche Ausrichtung wie das Fahrzeugkoordinatensystem hat, nur dass sich der Koordinatenursprung auf der optischen Achse der Kamera innerhalb der Kamera befindet, ist der Gierwinkel einer Kamera ein Winkel, der sich aus einer Drehung um die z-Achse ergibt. Der Nickwinkel einer Kamera ist ein Winkel, der sich aus einer Drehung um die y-Achse ergibt.

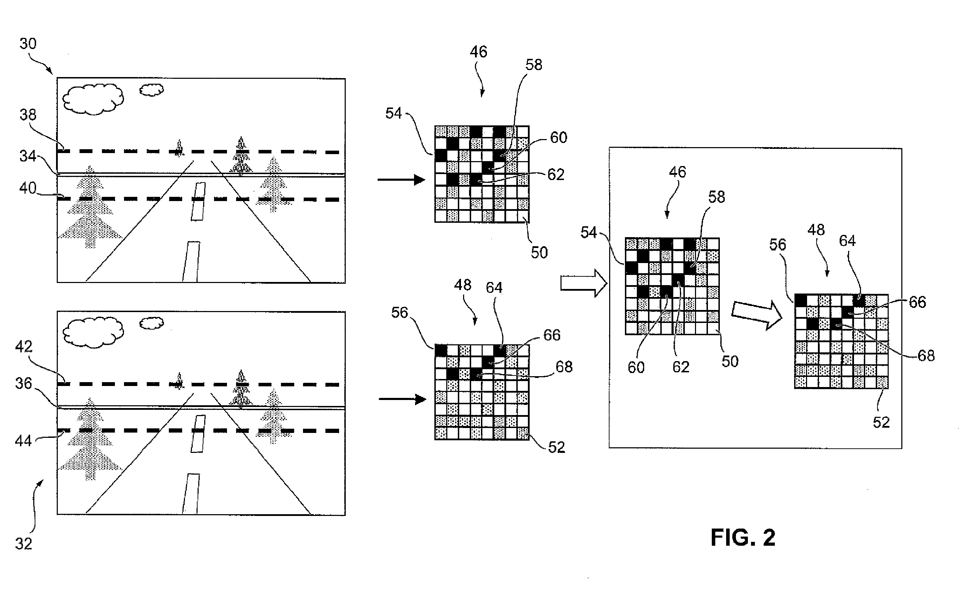

Figur 2 zeigt eine schematische Darstellung von zwei nacheinander aufgenommenen Bildern und von ersten aus den Bildern mit Hilfe des erfindungsgemäßen Verfahrens gewonnenen Informationen. Elemente mit gleichem Aufbau oder gleicher Funktion haben dieselben Bezugszeichen.

Bei dem Verfahren zur Ermittlung der Änderung der Lage des Kamerasystems 16 werden mindestens ein erstes Bild 30 und ein zweites Bild 32 mit Abbildungen des Erfassungsbereichs vor dem Fahrzeug 12 mit Hilfe der Kamera 17 des Kamerasystems 16 nacheinander aufgenommen. Die den Bildern entsprechenden Bilddaten werden mit Hilfe der Verarbeitungseinheit 22 derart verarbeitet, dass im ersten Bild 30 mehrere Bereiche festgelegt werden, die jeweils mindestens 2 Pixel. Vorzugsweise haben die Bereiche eine Größe im Bereich zwischen 1 Pixel x 50 Pixel und 1 Pixel x 100 Pixel bzw. zwischen 50 Pixel x 1 Pixel und 100 Pixel x 1 Pixel. Ein Pixel ist ein Bildpunkt eines Bildes. Für jeden Bereich wird mindestens ein den gesamten Bereich charakterisierender Wert mit Hilfe eines Wertermittlungsalgorithmus zur Ermittlung des den gesamten Bereich charakterisierenden Wertes ermittelt. Ferner werden im zweiten Bild 32 mehrere Bereiche festgelegt, die jeweils mindestens 2 Pixel umfassen, und für jeden Bereich mindestens ein den gesamten Bereich charakterisierender Wert mit Hilfe des Wertermittlungsalgorithmus ermittelt. In dem ersten Bild 30 und dem zweiten Bild 32 aus Figur 2 werden die Bereiche derart festgelegt, dass zeilenweise jeweils eine vorgegebene Anzahl Pixel zu einem Bereich zusammengefasst werden. Vorzugsweise wird jede Zeile in 10 im Wesentlichen gleich große Bereiche eingeteilt. Eine schematisch dargestellte Zeile ist im ersten Bild 30 mit den Bezugszeichen 34 und im zweiten Bild 32 mit dem Bezugszeichen 36 gekennzeichnet.

Es ist vorteilhaft, nur einen Teil der durch die Pixel gebildeten Zeilen 34, 36 des Bildes 30, 32 in Bereiche einzuteilen. Hierdurch wird der Aufwand reduziert. Dies wiederum hat den Vorteil, dass der Rechen- und Speicheraufwand und die hierfür notwendigen Ressourcen verringert werden. Somit wird eine kompakte Bauweise der Vorrichtung ermöglicht und die Kosten können reduziert werden.

Es ist besonders vorteilhaft, nur die mittleren Zeilen 34, 36 des Bildes 30, 32 für die Einteilung in die jeweiligen Bereiche vorzusehen. Der mittlere Teil des ersten Bildes 30, der die mittleren Zeilen 34 umfasst, ist im ersten Bild 30 durch die Strichlinien 38, 40 begrenzt. Der mittlere Teil des zweiten Bildes 32 der die mittlere Zeile 36 des zweiten Bildes 32 umfasst, ist durch die Strichlinien 42, 44 begrenzt. Die Position von Abbildungen von Objekten im zweiten Bild 32, deren Abbildungen im ersten Bild 30 im mittleren Teil des ersten Bildes 30 angeordnet sind, ist verglichen mit den Abbildungen der Objekte im ersten Bild 30 nur leicht verschoben. Deswegen kann davon ausgegangen werden, dass eine Verschiebung einer Abbildung eines Objektes im zweiten Bild 32 im Vergleich zur Abbildung desselben Objektes im ersten Bild 30 hauptsächlich durch eine Drehung des Fahrzeugskoordinatensystems des Fahrzeugs 12 im Bezug auf das Weltkoordinatensystem, beispielweise auf Grund von Nick- und/oder Gierbewegungen des Fahrzeugs 12, und nicht durch die Geradeausfahrt des Fahrzeugs 12 auf der Fahrbahn 14 hervorgerufen wird. Die Einteilung der mittleren Zeilen 34, 36 eines Bildes 30, 32 in Bereiche ist besonders bei der Bestimmung der Nickbewegung bzw. bei der Bestimmung der Änderung des Nickwinkels vorteilhaft.

Alternativ können die Bereiche in den Bildern 30, 32 derart festgelegt werden, dass spaltenweise jeweils eine vorgegebene Anzahl an Pixel zu einem Bereich zusammengefasst werden. Es ist vorteilhaft nur einen Teil der durch die Pixel gebildeten Spalten, vorzugsweise den mittleren Teil des jeweiligen Bildes 30, 32, in Bereiche einzuteilen. Die Einteilung der mittleren Spalten eines Bildes 30, 32 in Bereiche ist besonders bei der Bestimmung der Gierbewegung bzw. bei der Bestimmung der Änderung des Gierwinkels vorteilhaft.

Eine weitere Möglichkeit der Einteilung der Bereiche ist, das erste Bild 30 oder das zweite Bild 32 jeweils in rechteckige, gleichgroße Bereiche einzuteilen. Es ist vorteilhaft, jeweils nur einen Ausschnitt des ersten Bildes 30 beziehungsweise des zweiten Bildes 32 in rechteckige, gleichgroße Bereiche einzuteilen. Die blockhafte Einteilung in rechteckige, gleichgroße Bereiche ermöglicht einen einfachen Vergleich zwischen dem ersten Bild 30 und dem zweiten Bild 32. Ferner ermöglicht eine derartige Aufteilung eine einfache, eindeutige Zuordnung eines jeden Pixels zu einem Bereich.

Für jeden Bereich des ersten Bildes 30 wird ein den gesamten Bereich charakterisierender Wert mit Hilfe eines Wertermittlungsalgorithmus zur Ermittlung des den gesamten Bereich charakterisierenden Werts ermittelt. Ferner wird auch für jeden Bereich des zweiten Bildes 32 mindestens ein den gesamten Bereich charakterisierenden Wert mit Hilfe des Wertermittlungsalgorithmus ermittelt.

Vorteilhafterweise wird als charakterisierender Wert für einen Bereich ein Grauwert des Bereichs ermittelt. Die Ermittlung des Grauwerts eines jeden Bereichs erfolgt vorzugsweise jeweils als Mittelwert der Grauwerte aller Pixel des jeweiligen Bereichs. Hierzu werden die Grauwerte aller Pixel eines jeden Bereichs aufsummiert und durch die Anzahl der Pixel des jeweiligen Bereichs dividiert. Alternativ kann der Grauwert jedes Bereichs auch durch Aufsummieren der Grauwerte aller Pixel des jeweiligen Bereichs ermittelt werden.

Alternativ können die einen jeweiligen Bereich charakterisierenden Werte auch mittels diskreter Fourier-Transformation, Walsh-Transformation, Haar-Wavelet-Transformation, Haar-Transformation und/oder Hartley-Transformation ermittelt werden.

Bei der Anwendung der Fourier-Transformation erhält man als Ergebnis ein Ortsfrequenzspektrum. Hohe Ortsfrequenzen entsprechen dabei den kleinen Details im Bild während niedrige Frequenzen für grobe Bildstrukturen stehen. Wird für eine Zeile bzw. Spalte mit n Pixel eine zweidimensionale diskrete Fourier-Transformation berechnet, erhält man als Ergebnis n/2 komplexe Koeffizienten. Aus diesen lassen sich geeignete Werte auswählen, welche die Zeile bzw. die Spalte gut beschreiben. Verwendet man z.B. die ersten 10 Koeffizienten werden alle Details der Zeile bzw. der Spalte, insbesondere unerwünschtes Rauschen und Störungen, nicht berücksichtigt. Alternativ können auch nur die m größten Peaks (Maximalwerte im Signalverlauf) des Spektrums verwendet werden, wobei m ein voreingestellter ganzzahliger Parameter ist.

Alternativ können die einen jeweiligen Bereich charakterisierenden Werte auch aus dem Frequenzbereich der zu dem jeweiligen Bereich gehörenden Zeile 34, 36 beziehungsweise der zu den jeweiligen Bereichen gehörenden Spalte, aus Gradienteninformationen, aus ausgewählten Koeffizienten des Frequenzspektrums, als Summe von Kantenrichtungen und/oder aus Pixelstatistiken, beispielsweise Kontrasten oder 20%-Quantilen, ermittelt werden.

Des Weiteren können neben den oben genannten Werten auch andere Werte als die einzelnen Bereiche charakterisierende Werte verwendet werden. An die Wahl solcher charakterisierenden Werte werden insbesondere die Anforderungen Eindeutigkeit, Translationsinvarianz, Skalierungsinvarianz und minimale Anzahl gestellt.

Translationsinvarianz bedeutet, dass sich der charakterisierende Wert eines Bereichs nicht ändert, wenn der Bereich verschoben wird. Skalierungsinvarianz bedeutet, dass sich der charakterisierende Wert eines Bereichs nicht ändert, wenn der Bereich optisch vergrößert wird.

Die die jeweiligen Bereiche charakterisierenden Werte werden auch als Zeilen- beziehungsweise Spaltenmerkmale bezeichnet. Die Menge aller eine Zeile 34, 36 beziehungsweise Spalte charakterisierenden Werte wird auch als Merkmalsvektor bezeichnet.

Ferner ist in Figur 2 ein erster zum ersten Bild 30 gehörender Merkmalsblock 46 und ein zweiter zum zweiten Bild 32 gehörender Merkmalsblock 48 gezeigt. In jedem Block 46, 48 sind die jeweiligen Bereiche des ersten Bildes 30 beziehungsweise des zweiten Bildes 32 dargestellt. Die Bereiche sind jeweils in dem den jeweiligen Bereich charakterisierenden Wert, in diesem Fall dem mittleren Grauwert des jeweiligen Bereichs, eingefärbt. Einer dieser Bereiche ist im ersten Merkmalsblock 46 beispielhaft mit dem Bezugszeichen 50 und im Merkmalsblock 48 beispielhaft mit dem Bezugszeichen 52 gekennzeichnet.

In einem nächsten Schritt des Verfahrens zur Ermittlung der Änderung der Lage des Kamerasystems 16 wird die Position eines zu einem ersten Bereich 54 des ersten Bildes 30 korrespondierenden Bereichs 56 im zweiten Bild 32

mit Hilfe des charakterisierenden Wertes des ersten Bereichs 54 des ersten Bildes 30 und mindestens den charakterisierenden Wert mindestens eines Bereichs 56 des zweiten Bildes 32 ermittelt.

Die Ermittlung eines zu dem ersten Bereich 54 des ersten Bildes 30 korrespondierenden Bereichs 56 des zweiten Bildes 32 erfolgt beispielsweise durch den Vergleich der Grauwerte aller oder zumindest eines Teils der Bereiche des zweiten Bildes 32 mit dem Grauwert des ersten Bereichs 54 des ersten Bildes 30. Derjenige Bereich 56 des zweiten Bildes 32, dessen Grauwert mit dem Grauwert des ersten Bereichs 54 des ersten Bildes 30 zumindest annähernd übereinstimmt, wird als zu dem ersten Bereich 54 des ersten Bildes 30 potentiell korrespondierender Bereich 56 des zweiten Bildes 32 ermittelt. Diese Vorgehensweise wird auch als best-matching bezeichnet. Zur Reduktion des Aufwandes kann bei dem Vergleich der Grauwerte der Bereiche des zweiten Bildes 32 mit dem Grauwert des ersten Bereichs 54 des ersten Bildes 30 nur ein Teil der Bereiche des zweiten Bildes 32 herangezogen werden.

Bei der Auswahl derjenigen Bereiche des zweiten Bildes 32 deren Grauwerte mit dem Grauwert des ersten Bereichs 54 des ersten Bildes 30 verglichen werden, ist es vorteilhaft, vorhandenes Vorwissen zu nutzen. So können beispielsweise die affine Abbildung der Bereiche, ein adaptiver positions- und geschwindigkeitsabhängiger Suchbereich und/oder die zeitliche Vorhersage für die Position der einzelnen Bereiche für die Auswahl derjenigen Bereiche des zweiten Bildes 32 deren Grauwerte mit dem Grauwert des ersten Bereichs 54 des ersten Bildes 30 verglichen werden genutzt werden.

Im rechten Teil der Figur 2 ist der Vergleich der Grauwerte der Bereiche des zweiten zum zweiten Bild 32 gehörigen Merkmalsblocks 48 mit den Grauwerte der Bereiche des zum ersten Bild 30 gehörigen ersten Merkmalsblockes 46 angedeutet. Der Bereich 56 im zweiten Merkmalsblock 48 wurde hierbei als korrespondierender Bereich zum ersten Bereich 54 des ersten Merkmalsblocks 46 ermittelt. Der Bereich 56 ist verglichen mit der Position des ersten Bereichs 54 um 2 Bereiche nach oben verschoben.

Als nächster Schritt des Verfahrens zur Ermittlung der Änderung der Lage des Kamerasystems 16 wird der Abstand zwischen der Position des ersten Bereichs 54 im ersten Bild 30 und der Position des zum ersten Bereichs 54 des ersten Bildes 30 korrespondierenden Bereichs 56 im zweiten Bild 32 ermittelt der sich ergeben würde, wenn man das erste Bild 30 und das zweite Bild 32 beziehungsweise den ersten Merkmalsblock 46 und den zweiten Merkmalsblock 48 übereinander legen würde. Vorzugsweise wird der Abstand als euklidischer Abstand zwischen den jeweiligen Bereichen 54, 56 ermittelt. Mit Hilfe dieser Abstände lässt sich auf einfache Weise die Änderung der Lage der Kameras 17 zwischen dem Zeitraum der Aufnahme des ersten Bildes 30 und dem Zeitpunkt der Aufnahme des zweiten Bildes 32 ermitteln.

Bei einer alternativen Ausführungsform des erfindungsgemäßen Verfahrens wird mindestens eines durch die charakterisierenden Werte von mindestens zwei Bereichen 50 des ersten Bildes 30 gebildeten ersten Musters des ersten Bildes 30 im ersten Bild 30 ermittelt und die Position eines zum ersten Muster des ersten Bildes 30 korrespondierenden Musters des zweiten Bildes 32 ermittelt. Beispielsweise wird das erste Muster des ersten Bildes 30 durch die Bereiche 58, 60, 62 des ersten Merkmalsblockes 46 gebildet. Das zu dem ersten Muster des ersten Bildes 30 korrespondierende Muster des zweiten Bildes 32 wird durch die Bereiche 64, 66, 68 gebildet. Die Ermittlung des korrespondierenden Musters im zweiten Bild 32 kann mit Hilfe der gleichen charakterisierenden Werte erfolgen wie im Zusammenhang mit der Ermittlung einzelner Bereiche 52 des zweiten Bildes 32, die zu einzelnen Bereichen 50 des ersten Bildes 30 korrespondieren, weiter oben beschrieben. Anschließend wird auch hier der Abstand zwischen dem ersten Muster im ersten Bild 30 und dem zum ersten Muster des ersten Bildes 30 korrespondierenden ersten Muster des zweiten Bildes 32, der sich bei Überlagerung des ersten Bildes 30 und des zweiten Bildes 32 ergeben würde, ermittelt. Der Abstand wird hierbei beispielweise als der Abstand in Pixeln in x-Richtung und y-Richtung einer Pixelmatrix ermittelt.

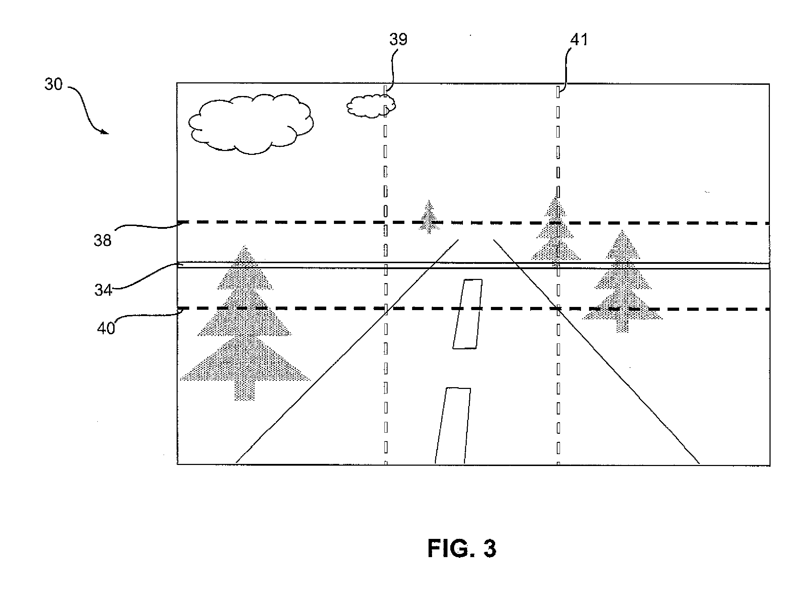

In Figur 3 ist eine vergrößerte Ansicht des ersten Bildes 30 nach Figur 2 gezeigt. Durch die Strichlinien 38, 39, 40, 41 wird ein mittlerer Teil des ersten Bildes 30 begrenzt. Es ist vorteilhaft, nur diejenigen Ausschnitte der Zeilen 34 in Bereiche einzuteilen, die sich im mittleren Teil des Bildes befinden. Eine entsprechende Einteilung der Bereiche kann ebenso für das zweite Bild 32 erfolgen.

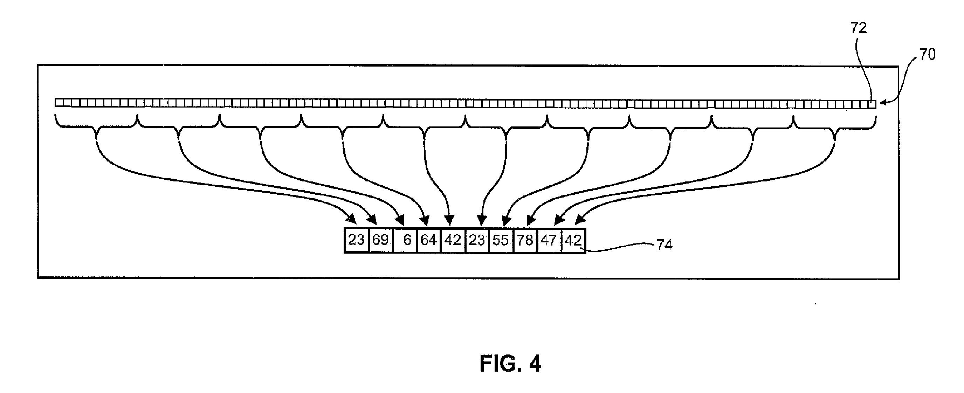

In Figur 4 wird ein eine Vielzahl von Pixel umfassender Ausschnitt 70 einer Zeile eines mit Hilfe der Kamera 17 des Kamerasystems 16 aufgenommenen Bildes und eine mögliche Einteilung des Ausschnitts 70 der Zeile in mehrere Bereiche 74 gezeigt. Ein Pixel ist beispielhaft mit dem Bezugszeichen 72 gekennzeichnet. Der Ausschnitt 70 umfasst in diesem Ausführungsbeispiel insgesamt 100 Pixel, von denen ein Pixel beispielhaft mit dem Bezugszeichen 72 gekennzeichnet ist. Jeweils 10 benachbarte Pixel werden zu einem Bereich zusammengefasst. Das Zusammenfassen von 10 Pixel zu einem Bereich ist jeweils durch eine geschweifte Klammer in Figur 4 angedeutet. Insgesamt wird der Ausschnitt 70 somit in 10 Bereiche aus jeweils 10 Pixel eingeteilt. Einer dieser Bereiche ist beispielhaft mit dem Bezugszeichen 74 gekennzeichnet. Für jeden der Bereiche wird ein den gesamten Bereich charakterisierenden Wert ermittelt. Hierfür wird beispielsweise der Mittelwert der Grauwerte aller zu einem Bereich 74 gehörenden Pixel ermittelt. Diese Grauwerte sind in Figur 4 durch die Zahlen, die in den jeweiligen Bereich geschrieben sind, veranschaulicht.

Auf diese Weise kann der Aufwand des Verfahrens erheblich reduziert werden, da die Grauwerte wesentlich weniger Bereiche des ersten Bildes 30 und des zweiten Bildes 32 als bei einem Vergleich einzelner Pixel der ersten Bildes 30 und des zweiten Bildes 32 miteinander verglichen werden müssen. Wie stark der Aufwand reduziert werden kann, soll im Folgenden anhand eines weiteren Ausführungsbeispiels näher erläutert werden. Elemente mit gleichem Aufbau oder gleicher Funktion haben dieselben Bezugzeichen.

In diesem Ausführungsbeispiel werden die Bereiche der Bilder 30, 32 dadurch festgelegt, dass p Bereichsmittelwerte als Zeilenmerkmal verwendet werden, wobei p ein voreingestellter Parameter ist. Eine Zeile mit x (z. B. 640) Pixel wird zu einem Merkmalvektor mit p (z. B. p=10) Elementen reduziert, in dem die Zeilen in p Bereiche aufgeteilt wird und jeweils der Mittelwert dieser Bereiche als ein Element des Merkmalvektors verwendet wird. Der Mittelwert der Pixel 1 bis 64 entspricht dem ersten Element des Merkmalvektors, der Mittelwert der Pixel 65 bis 128 dem zweiten Element usw. Zur weiteren Reduktion der zu verarbeitenden Bilddaten ist es vorteilhaft, die Auswertung auf geeignete Bereiche des Bildes zu beschränken. Daher werden beispielsweise nur von den q (z. B. q= 50) mittleren Zeilen des ersten und des zweiten Bildes 30, 32 jeweils Zeilenmerkmale ermittelt. Der dazu erforderliche Verarbeitungsaufwand ist relativ gering. Ausgehend von einem Bild mit 640 x 480 Pixel wird bei der Verwendung von 50 mittleren Zeilen und Merkmalsvektoren mit jeweils 10 Elementen pro Zeile die zu vergleichende Informationsmenge von 307 200 (640 x 480) Werten auf 500 (50 x 10) Werte pro Bild reduziert. Als Ergebnis der Reduktion der Bilddaten erhält man jeweils für das aktuelle zweite Bild 32 und das vorangegangene erste Bild 30 q Zeilenmerkmale mit p Elementen. Diese können effizient auf maximale Ähnlichkeit der Zeilenmerkmale verglichen werden.

Die Ermittlung eines zum einem ersten Merkmalsvektor des ersten Bildes (30) korrespondierenden Merkmalsvektors des zweiten Bildes (32) erfolgt vorzugsweise mittels der euklidischen Distanz zwischen dem ersten Merksmalvektor des ersten Bildes (30) und jeweils einem Merkmalsvektor des zweiten Bildes (32). Hierzu wird ein Merkmalsvektor mit p Elementen als ein Punkt in einem p-dimensionalen Raum ausgefasst. Der Abstand zwischen zwei Merkmalsvektoren lässt sich mit Hilfe der euklidischen Distanz zwischen den Merkmalsvektoren ermitteln. Derjenige Merkmalsvektor des zweiten Bildes (32), der den geringsten Abstand zu dem ersten Merkmalsvektor des ersten Bildes (30) hat, wird dem ersten Merkmalsvektor des ersten Bildes als korrespondierender Merkmalsvektor zugeordnet.

Die euklidische Distanz d zwischen zwei Merkmalsvektoren x und y mit jeweils p Elementen lässt sich beispielsweise ermitteln als:

$$d(x, y) = \sqrt{\sum_{i=1}^{p} (y_i - x_i)^2}$$

Alternativ können auch andere Formeln der euklidischen Distanz verwendet werden. Ebenso können alternativ auch andere Ähnlichkeitsmaße verwendet werden.

Bei der Ermittlung der Verschiebung des ersten Bildes und des zweiten Bildes zueinander können vorzugsweise die lokale optimale Verschiebung oder die globale optimale Verschiebung ermittelt werden. Bei der lokalen optimalen Verschiebung wird die am besten übereinstimmende Zeile für jede einzelne Zeile bestimmt und dann aus den n einzelnen Zeilenverschiebungen eine Verschiebung des Bildes ermittelt.

Bei der globalen optimalen Verschiebung wird eine Verschiebung ermittelt, die über alle Zeilen die beste Übereinstimmung darstellt. Die Verschiebung für eine einzelne Zeile ist hierbei eventuell nicht optimal. Die Ermittlung der globalen optimalen Verschiebung ist im Vergleich zur Ermittlung der lokalen optimalen Verschiebung das robustere Verfahren, da sich die Zeilen im Bild nicht unabhängig voneinander verschieben können.

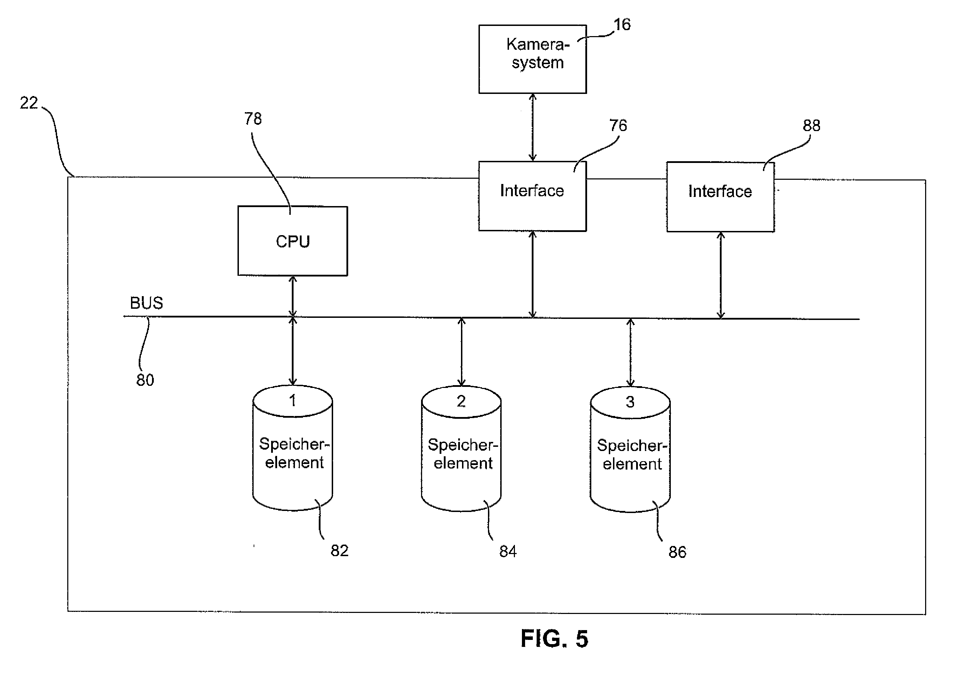

In Figur 5 ist ein Blockschaltbild mit der Verarbeitungseinheit 22 und dem Kamerasystem 16 gezeigt. Die Verarbeitungseinheit 22 umfasst eine Central Processing Unit (CPU) 78, einen Datenbus 80 und drei Speicherelemente 82 bis 86.

Die Verarbeitungseinheit 22 ist über ein erstes Interface 76 mit dem Kamerasystem 16 verbunden. Ferner umfasst die Verarbeitungseinheit 22 ein zweites Interface 88, über das die mit Hilfe der Verarbeitungseinheit 22 verarbeiteten Daten an andere Elemente, beispielsweise das Lichtsteuermodul 24, ausgegeben werden können. Vorzugsweise bildet das zweite Interface 88 eine Verbindung zu einem Fahrzeugbussystem.

Die CPU 78, das erste Interface 76, das zweite Interface 88, und die Speicherelemente 82, 84, 86 sind über den Datenbus 80 miteinander verbunden. Die den mit Hilfe des Kamerasystems 16 erzeugten den Bildern 30, 32 entsprechenden Bilddaten werden über das erste Interface 76 von dem Kamerasystem 16 an die Verarbeitungseinheit 22 als Eingangsdaten übermittelt. Die Bilddaten werden im ersten Speicherelement 82 gespeichert. Im zweiten Speicherelement 84 der Verarbeitungseinheit 22 sind mindestens Programmdaten mindestens eines Bildverarbeitungsprogramms zur Festlegung der Bereiche 50 im ersten Bild 30 und der Bereiche 52 im zweiten Bild 32 gespeichert. Ebenso sind im zweiten Speicherelement 84 Programmdaten eines Wertermittlungsalgorithmus gespeichert, mit dessen Hilfe für jeden Bereich 50 des ersten Bildes 30 und für jeden Bereich 52 des zweiten Bildes 32 mindestens ein den gesamten Bereich 50, 52 charakterisierenden Wert ermittelt wird. Mit Hilfe des Bildverarbeitungsprogramms wird mindestens die Position eines zum ersten Bereich 54 des ersten Bildes 30 korrespondierenden Bereichs 56 des zweiten Bildes 32 mit Hilfe des charakterisierenden Wertes des ersten Bereichs 54 des ersten Bildes 30 und mindestens dem charakterisierenden Wert mindestens eines Bereichs 56 des zweiten Bildes 32 ermittelt. Die die einzelnen Bereiche 50, 52 charakterisierenden Werte werden im ersten Speicherelement 82 gespeichert.

Anschließend wird mit Hilfe des Bildverarbeitungsprogramms in Abhängigkeit von der Position des ersten Bereichs 54 im ersten Bild 30 und der Position des zum ersten Bereich 54 des ersten Bildes 30 korrespondierenden Bereichs 56 des zweiten Bildes 32 die Änderung der Lage des Kamerasystems 16 zwischen dem Zeitpunkt der Aufnahme des ersten Bildes 30 und dem Zeitpunkt der Aufnahme des zweiten Bildes 32 ermittelt. Die ermittelte Änderung der Lage des Kamerasystems 16 wird im dritten Speicherelement 86 der Verarbeitungseinheit 22 gespeichert.

Die ermittelte Änderung der Lage des Kamerasystems16 kann bei der weiteren Verarbeitung der Bilddaten mit Hilfe der Verarbeitungseinheit 22 berücksichtigt werden, oder über das zweite Interface 88 ausgegeben werden.

Bezugszeichenliste

| | |
|---|---|
| 10 | Verkehrssituation |
| 12 | Fahrzeug |
| 14 | Fahrbahn |
| 16 | Kamerasystem |
| 17 | Kamera |
| 18, 20 | Erfassungsbereich |
| 22 | Verarbeitungseinheit |
| 24 | Lichtsteuermodul |
| 26 | Frontscheinwerfer |
| 28 | Verkehrszeichen |
| 30, 32 | Bild |
| 34, 36 | Zeile |
| 38, 40, 42, 44 | Mittlerer Bildteil |
| 46, 48 | Merkmalsblock |
| 50, 52, 54, 56, 58, 60, 62, 64, 66, 68 | Bereiche |
| 70 | Zeile |
| 72 | Pixel |
| 74 | Bereich |
| 76, 88 | Interface |
| 78 | CPU |
| 80 | Bus |
| 82, 84, 86 | Speicherelemente |

**Patentansprüche**

1. Verfahren zum Ermitteln der Lageänderung eines Kamerasystems,
   bei dem mit Hilfe von mindestens einer Kamera (17) des Kamerasystems (16) mindestens ein erstes Bild (30) und ein zweites Bild (32) mit Abbildungen eines Erfassungsbereichs (18, 20) vor einem Fahrzeug (12) nacheinander aufgenommen werden, wobei den Bildern (30, 32) entsprechende Bilddaten erzeugt werden,
   bei dem die erzeugten Bilddaten mit Hilfe einer Verarbeitungseinheit (22) verarbeitet werden,
   wobei im ersten Bild (30) mehrere Bereiche (50, 54, 58, 60, 62) festgelegt werden, die jeweils mindestens zwei Pixel (72) umfassen, und für jeden Bereich (50, 54, 58, 60, 62) mindestens ein den gesamten Bereich (50, 54, 58, 60, 62) charakterisierender Wert mit Hilfe eines Wertermittlungsalgorithmus zur Ermittlung des den gesamten Bereich (50, 54, 58, 60, 62) charakterisierenden Werts ermittelt wird,
   wobei im zweiten Bild (32) mehrere Bereiche (52, 56, 64, 66, 68) festgelegt werden, die jeweils mindestens zwei Pixel (72) umfassen, und für jeden Bereich (52, 56, 64, 66, 68) mindestens ein den gesamten Bereich (52, 56, 64, 66, 68) charakterisierender Wert mit Hilfe des Wertermittlungsalgorithmus ermittelt wird,
   bei dem zumindest die Position eines zu einem ersten Bereich (54) des ersten Bildes (30) korrespondierenden Bereichs (56) im zweiten Bild (32) mit Hilfe des charakterisierenden Werts des ersten Bereichs (54) des ersten Bildes (30) und mindestens dem charakterisierenden Wert mindestens eines Bereichs (56) des zweiten Bildes (32) ermittelt wird, und
   mindestens in Abhängigkeit von der Position des ersten Bereichs (54) im ersten Bild (30) und der Position des zum ersten Bereich (54) des ersten Bildes (30) korrespondierenden Bereichs (56) des zweiten Bildes (32) die Änderung der Lage des Kamerasystems (16) zwischen dem Zeitpunkt der Aufnahme des ersten Bildes (30) und dem Zeitpunkt der Aufnahme des zweiten Bildes (32) ermittelt wird.

2. Verfahren nach Anspruch 1, **dadurch gekennzeichnet, dass** zumindest ein Ausschnitt des ersten Bildes (30) und ein Ausschnitt des zweiten Bildes (32) jeweils in rechteckige, gleichgroße Bereiche (50 bis 68) aufgeteilt werden.

3. Verfahren nach einem der vorhergehenden Ansprüche, **dadurch gekennzeichnet, dass** die Bereiche (50 bis 68) jeweils derart festgelegt werden, dass zeilenweise jeweils eine vorgegebene Anzahl an Pixel (72) zu einem Bereich (50 bis 68) zusammengefasst werden.

4. Verfahren nach Anspruch 3, **dadurch gekennzeichnet, dass** nur ein Teil der durch die Pixel (72) gebildeten Zeilen (34, 36), vorzugsweise der mittlere Teil des jeweiligen Bildes (30, 32), in Bereiche (50 bis 68) eingeteilt wird.

5. Verfahren nach einem der Ansprüche 1 oder 2, **dadurch gekennzeichnet, dass** die Bereiche (50 bis 68) derart festgelegt werden, dass spaltenweise jeweils eine vorgegebene Anzahl an Pixel (72) zu einem Bereich (50 bis 68) zusammengefasst werden.

6. Verfahren nach Anspruch 5, **dadurch gekennzeichnet, dass** nur ein Teil der durch die Pixel (72) gebildeten Spalten, vorzugsweise der mittlere Teil des jeweiligen Bildes (30, 32), in Bereiche (50 bis 68) eingeteilt wird.

7. Verfahren nach einem der vorhergehenden Ansprüche, **dadurch gekennzeichnet, dass** jeweils als charakterisierenden Wert für einen Bereich (50 bis 68) ein Grauwert des Bereichs (50 bis 68) ermittelt wird.

8. Verfahren nach Anspruch 7, **dadurch gekennzeichnet, dass** der Grauwert eines jeden Bereichs (50 bis 68) jeweils durch Aufsummieren der Grauwerte aller Pixel (72) des jeweiligen Bereichs (50 bis 68) ermittelt wird.

9. Verfahren nach Anspruch 7, **dadurch gekennzeichnet**, der Grauwert eines jeden Bereichs (50 bis 68) jeweils als Mittelwert der Grauwerte aller Pixel (72) des jeweiligen Bereichs (50 bis 68) ermittelt wird.

10. Verfahren nach einem der vorhergehenden Ansprüche, **dadurch gekennzeichnet, dass** mindestens eines durch die charakterisierenden Werte von mindestens zwei Bereichen (50, 54, 58, 60, 62) des ersten Bildes (30) gebildeten ersten Musters des ersten Bildes (30) im ersten Bild (30) ermittelt wird,
    die Position eines zum dem ersten Muster des ersten Bildes (30) korrespondierenden ersten Musters des zweiten Bildes (32) ermittelt wird, und
    mindestens in Abhängigkeit von der Position des ersten Muster des ersten Bildes (30) im ersten Bild (30) und der Position des ersten Musters des zweiten Bildes (32) im zweiten Bild (32) die Änderung der Lage des Kamerasystems (16) zwischen dem Zeitpunkt der Aufnahme des ersten Bildes (30) und dem Zeitpunkt der Aufnahme des zweiten Bildes (32) ermittelt wird.

**11.** Verfahren nach Anspruch 10, **dadurch gekennzeichnet, dass** die Ermittlung der Position des Musters im zweiten Bild (32) mittels Korrelationsanalyse erfolgt.

**12.** Verfahren nach Anspruch 10, **dadurch gekennzeichnet, dass** das zum ersten Muster des Bildes (30) korrespondierende erste Muster des zweiten Bildes (32) mittels euklidischer Distanz ermittelt wird.

**13.** Verfahren nach einem der vorhergehenden Ansprüche, **dadurch gekennzeichnet, dass** der Abstand zwischen der Position eines ersten Bereichs (54) im ersten Bild (30) und der Position des zum ersten Bereichs (54) des ersten Bildes (30) korrespondierenden Bereichs (56) im zweiten Bild (32), vorzugsweise in Pixeln, ermittelt wird.

**14.** Verfahren nach einem der vorhergehenden Ansprüche, **dadurch gekennzeichnet, dass** als Lageänderung eine Nickwinkeländerung, eine Gierwinkeländerung, ein Nickwinkel und/oder ein Gierwinkel ermittelt werden.

**15.** Vorrichtung zum Erfassen und Verarbeiten von Bildern,
mit mindestens einem Kamerasystem (16) mit mindestens einer Kamera (17) zur Aufnahme mindestens eines ersten Bildes (30) und eines zweiten Bildes (32) mit Abbildungen eines Erfassungsbereichs (18, 20) vor einem Fahrzeug (12),
mit mindestens einer Verarbeitungseinheit (22) zur Verarbeitung der mit Hilfe des Kamerasystems (16) erzeugten den Bildern (30, 32) entsprechende Bilddaten,
wobei die Verarbeitungseinheit (22) mindestens ein Bildverarbeitungsprogramm zur Festlegung von mehreren Bereiche (50, 54, 58, 60, 62) im ersten Bild (30), die jeweils mindestens zwei Pixel (72) umfassen, und zur Festlegung von mehrere Bereiche (52, 56, 64, 66, 68) im zweiten Bild (32), die jeweils mindestens zwei Pixel (72) umfassen, abarbeitet,
wobei die Verarbeitungseinheit (22) einen Wertermittlungsalgorithmus abarbeitet, mit dessen Hilfe für jeden Bereich (50, 54, 58, 60, 62) des ersten Bildes (30) und für jeden Bereich (52, 56, 64, 66, 68) des zweiten Bildes (32) mindestens ein den gesamten Bereich (50 bis 68) charakterisierender Wert ermittelt wird,
wobei mit Hilfe des Bildverarbeitungsprogramms zumindest die Position eines zu einem ersten Bereich (54) des ersten Bildes (30) korrespondierenden Bereichs (56) im zweiten Bild (32) mit Hilfe des charakterisierenden Werts des ersten Bereichs (54) des ersten Bildes (30) und mindestens dem charakterisierenden Wert mindestens eines Bereichs (56) des zweiten Bildes (32) ermittelt wird, und
wobei mit Hilfe des Bildverarbeitungsprogramms mindestens in Abhängigkeit von der Position des ersten Bereichs (54) im ersten Bild (30) und der Position des zum ersten Bereich (54) des ersten Bildes (30) korrespondierenden Bereichs (56) des zweiten Bildes (32) die Änderung der Lage des Kamerasystems (16) zwischen dem Zeitpunkt der Aufnahme des ersten Bildes (30) und dem Zeitpunkt der Aufnahme des zweiten Bildes (32) ermittelt wird.

Figur 1

EP 2 192 550 A1

FIG. 2

**FIG. 3**

FIG. 4

**FIG. 5**

EP 2 192 550 A1

Europäisches
Patentamt

European
Patent Office

Office européen
des brevets

**EUROPÄISCHER RECHERCHENBERICHT**

Nummer der Anmeldung

EP 09 17 5744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 578 116 A1 (MITSUBISHI ELECTRIC CORP [JP]) 21. September 2005 (2005-09-21) * das ganze Dokument * ----- | 1-15 | INV. G06T7/20 |
| A | SANG-HACK JUNG ET AL: "Egomotion Estimation in Monocular Infra-red Image Sequence for Night Vision Applications" APPLICATIONS OF COMPUTER VISION, 2007. WACV '07. IEEE WORKSHOP ON, IEEE, PI, 1. Februar 2007 (2007-02-01), Seiten 8-8, XP031055117 ISBN: 978-0-7695-2794-9 * das ganze Dokument * ----- | 1-15 | |
| X | BALAKIRSKY S B ET AL: "Performance Characterization of Image Stabilization Algorithms" REAL-TIME IMAGING, ACADEMIC PRESS LIMITED, GB, Bd. 2, Nr. 5, 1. Oktober 1996 (1996-10-01) , Seiten 297-313, XP004419666 ISSN: 1077-2014 * Seite 297 - Seite 299 * ----- | 1,15 | |
| A | US 2006/251410 A1 (TRUTNA WILLIAM R JR [US]) 9. November 2006 (2006-11-09) * Absatz [0057] - Absatz [0076] * ----- | 1-15 | **RECHERCHIERTE SACHGEBIETE (IPC)** G06T |

Der vorliegende Recherchenbericht wurde für alle Patentansprüche erstellt

| Recherchenort | Abschlußdatum der Recherche | Prüfer |
|---|---|---|
| München | 21. Januar 2010 | Rockinger, Oliver |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 17 5744

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2010

| Im Recherchenbericht angeführtes Patentdokument | Datum der Veröffentlichung | Mitglied(er) der Patentfamilie | | Datum der Veröffentlichung |
|---|---|---|---|---|
| EP 1578116 A1 | 21-09-2005 | CN | 1717923 A | 04-01-2006 |
| | | WO | 2004062270 A1 | 22-07-2004 |
| | | JP | 3770271 B2 | 26-04-2006 |
| | | US | 2006152590 A1 | 13-07-2006 |
| US 2006251410 A1 | 09-11-2006 | CN | 1912685 A | 14-02-2007 |
| | | GB | 2426655 A | 29-11-2006 |
| | | JP | 2006350305 A | 28-12-2006 |
| | | KR | 20060115656 A | 09-11-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10115043 A1
- DE 102004023322 A1